# EUROPEAN PATENT SPECIFICATION

(11) **EP 2 147 534 B1**
(45) Date of publication and mention of the grant of the patent: **27.10.2010**
(21) Application number: 08710065.7
(22) Date of filing: 15.02.2008
(51) Int. Cl.: H04L 29/06, G06F 17/30

(54) **COMPUTER PROGRAM PRODUCTS, APPARATUSES AND METHODS FOR ACCESSING DATA**
COMPUTERPROGRAMMPRODUKTE, VORRICHTUNGEN UND VERFAHREN ZUM ZUGREIFEN AUF DATEN
PRODUITS DE PROGRAMME D'ORDINATEUR, APPAREILS ET PROCÉDÉS POUR ACCÉDER À DES DONNÉES

(30) Priority: 24.04.2007 US 739168
(43) Date of publication of application: 27.01.2010
(73) Proprietor: Nokia Corporation, 02150 Espoo (FI)
(72) Inventor: PALNAU, Eugen, D-44139 Dortmund (DE)
(74) Representative: Tognetty, Virpi Maria
(86) International application number: PCT/IB2008/050569
(87) International publication number: WO 2008/129429

(56) References cited:
- EP-A- 1 349 164
- US-A1- 2002 039 196
- US-A1- 2004 128 701
- MANDERS B ET AL: "Media Transfer Protocol" INTERNET CITATION, [Online] XP002353416 Retrieved from the Internet: URL:download.microsoft.com/download/1/8/f/ 18f8cee2-0b64-41f2-893d-a6f229 5b40c8/TW04083 WINHEC2004.ppt> [retrieved on 2005-11-10]

## Description

### TECHNOLOGICAL FIELD

Embodiments of the present invention relate generally to data storage and transfer technology and, more particularly, to accessing data stored in devices.

### BACKGROUND

The use of devices to store data files is continually increasing. Mobile terminals, for instance, are often used to store music, video, pictures, and games, among other types of data files. For example, a user may transfer a favorite song from a personal computer onto a mobile telephone so that he may listen to the song when he is away from the personal computer. Similarly, a user may download pictures from the Internet onto her portable digital assistant (PDA) for later transfer to her computer at home.

Several types of data communication protocols exist to provide rules for the format and transmission of data between two devices, such as the mobile terminal and the personal computer in the previous examples. Some protocols allow access not only to the content data of the file, but also to the metadata of the file.

Metadata can be generally defined as data that describes the content or attributes of the file, or data about data. For example, an MP3 audio file may contain metadata describing the title of the song, the artist, the album, and other characteristics of the data, such as the file size and creation date. A picture file, on the other hand, may contain metadata describing the shutter and exposure associated with the image in addition to the file size and creation. In any case, metadata is often useful to provide an overview of the content of the file without accessing the content of the file itself.

While some communication protocols, such as the Objects Exchange (OBEX) protocol, do not define means to access metadata, other protocols may provide access to the metadata of the file. For example, Media Transfer Protocol (MTP) allows the transfer of metadata from one device to another across a Universal Serial Bus (USB). However, in order for the metadata to be properly accessed, the device storing the data file must support parts of the protocol allowing the transfer of metadata. In some cases, the transfer of metadata from a mobile terminal to another device, such as a computer, is not supported by the mobile terminal. In these cases, the other device (e.g., the computer) is generally unable to read the metadata unless the content data, which embeds the metadata (such as ID3 tags in MP3 files), is transferred to the computer. As a result, the computer will not be able to generate an overview of the data file stored on the mobile terminal.

Aside from transferring the entire file from the mobile terminal to the other device, the metadata may be accessed by extending the functionality of the mobile terminal to make the mobile terminal support metadata transfers. Modifying or upgrading the mobile terminal, however, requires that the user spend money, or at least time, to modify the mobile terminal and may also prevent the user from being able to use the mobile terminal while the modifications are being performed. Moreover, the device vendor may not provide the firmware with the extended functionality.

Document entitled "Media Transfer Protocol" which is published on the Internet at "download.microsoft.com/download/1/8/F/18F8cee2-Ob64-41F2-893d-a6F229 5b40c8/TW O4083 WINHEC 2004.ppt", discloses a method in which one dence request, metadata from a sever by issuing a dedicated command. The protocol used is the MTP.

Thus, there is a need for accessing metadata from a device without downloading the entire file including the content data in a way that is supported by the device and does not require modification of the device.

### BRIEF SUMMARY

An apparatus, method, computer program product, and system are therefore provided for accessing metadata from a device, such as a mobile terminal. Thus, metadata may be transferred and parsed without the transfer of the entire file stored by the device and without modification of the device on which the data is stored.

In one exemplary embodiment, an apparatus according to claim 9 for accessing metadata from a device is provided. The apparatus comprises a processor configured to communicate with a device storing data including metadata and content data. The apparatus also comprises a connection configured to support communications between the processor and the device. The processor is configured to issue a command to the device via the connection specifying a position in the data and an amount of data to be transferred. Furthermore, the processor is configured to receive a portion of the data including the metadata but less than all the content data from the device in response to the command and is configured to parse the portion of the data received to access the metadata.

In some embodiments, the processor is configured to communicate with the device using a Media Transfer Protocol (MTP). Also, the connection configured to support communications between the processor and the device may comprise a Universal Serial Bus (USB) connection.

The processor may be configured to determine the type of content data stored by the device. The processor may further be configured to specify a predetermined amount of data to be transferred and the position in the data relative to which to transfer the predetermined amount according to the type of content data stored by the device. Alternatively, the processor may be configured to estimate the amount of data to be transferred and the position in the data relative to which to transfer the amount according to the type of content data stored by the device.

In addition, the processor may be configured to determine a total size of the data stored by the device. Furthermore, the processor may be configured to estimate the amount of data to be transferred according to the total size of the data stored by the device. In some embodiments, the processor further comprises a display configured to present the accessed metadata in a user-readable format.

In other exemplary embodiments, a method according to claim 1 and computer program product according to claim 12 for accessing metadata from a device are provided. The method and computer program product issue a command to transfer metadata to a device storing data comprising the metadata and content data. The command specifies a position in the data and an amount of the data to be transferred. A portion of the data including the metadata but less than all the content data is then received in response to the command, and the portion of the data received is parsed to access the metadata. In some embodiments, the command may be issued using a Media Transfer Protocol (MTP).

The type of content data stored by the device may also be determined. The issued command may specify a predetermined amount of data to be transferred and the position in the data relative to which to transfer the predetermined amount according to the type of content data stored by the device. Alternatively, the amount of data to be transferred and the position in the data relative to which to transfer the amount may be estimated according to the type of data stored by the device.

In some embodiments, a total size of the data stored by the device may be determined. The amount of data to be transferred may be estimated according to the total size of the data stored by the device. Furthermore, in some embodiments, the accessed metadata is displayed in a user-readable format.

In another exemplary embodiment, an apparatus for accessing metadata from a device is provided that includes means for issuing a command to transfer metadata to a device storing data comprising the metadata and content data, wherein the command specifies a position in the data and an amount of the data to be transferred. The apparatus of this embodiment also includes means for receiving from the device a portion of the data including the metadata but less than all the content data in response to the command and means for parsing the portion of the data received to access the metadata. The apparatus may also include means for displaying the accessed metadata in a user-readable format.

In another exemplary embodiment, a system according to claim 15 for accessing metadata from a device is provided. The system includes a first device configured to store data comprising metadata and content data, a second device configured to communicate with the first device, and a connection configured to support communications between the first device and the second device. The second device is further configured to issue a command to the first device via the connection specifying a position in the data and an amount of data to be transferred, to receive a portion of the data including the metadata but less than all the content data from the first device in response to the command, and to parse the portion of the data received to access the metadata.

In some embodiments, the second device may be configured to communicate with the first device using a Media Transfer Protocol (MTP). The connection configured to support communications between the first device and the second device may further comprise a Universal Serial Bus (USB) connection.

The second device may be configured to determine the type of content data stored by the first device. The second device may be configured to specify a predetermined amount of data to be transferred and the position in the data relative to which to transfer the predetermined amount according to the type of content data stored by the first device. Furthermore, the second device may be configured to estimate the amount of data to be transferred and the position in the data relative to which to transfer the amount according to the type of content data stored by the first device.

The second device may be configured to determine a total size of the data stored by the first device. In addition, the second device may be configured to estimate the amount of data to be transferred according to the total size of the data stored by the first device. In some embodiments, the second device may comprise a display configured to present the accessed metadata in a user-readable format.

Further embodiments are defined in the dependent claims.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a schematic block diagram of a mobile terminal according to an exemplary embodiment of the present invention;
FIG. 2 is a schematic block diagram of a wireless communications system according to an exemplary embodiment of the present invention;
FIG. 3 is a schematic representation of a system according to an exemplary embodiment of the present invention;
FIG. 4 is a schematic block diagram of an apparatus according to an exemplary embodiment of the present invention; and
FIG. 5 illustrates a flowchart according to an exemplary embodiment for accessing metadata.

### DETAILED DESCRIPTION

Embodiments of the present inventions now will be described more fully hereinafter with reference to the accompanying drawings, in which some, but not all embodiments of the inventions are shown. Indeed, embodiments of these inventions may be embodied in many different forms and should not be construed as limited to the embodiments set forth herein; rather, these embodiments are provided so that this disclosure will satisfy applicable legal requirements. Like reference numerals refer to like elements throughout.

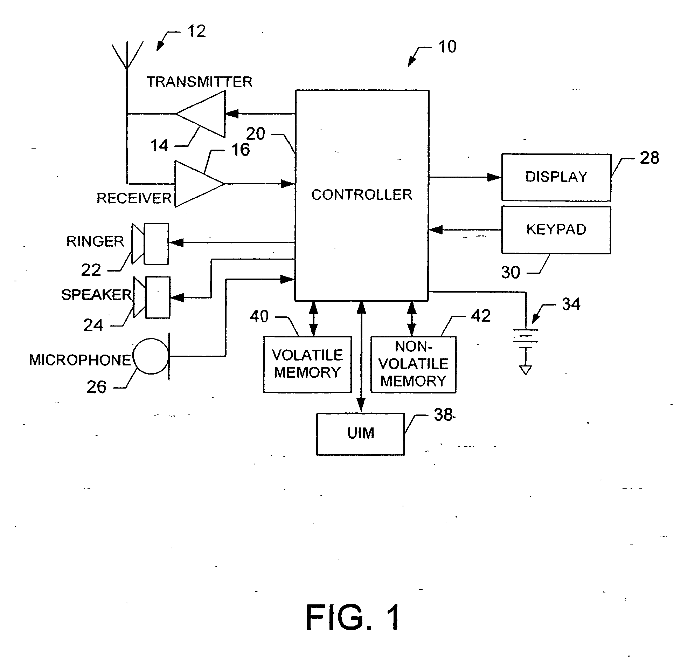

Fig. 1 illustrates a block diagram of a mobile terminal **10** that would benefit from embodiments of the present invention. It should be understood, however, that a mobile telephone as illustrated and hereinafter described is merely illustrative of one type of mobile terminal that would benefit from the present invention and, therefore, should not be taken to limit the scope of the present invention. While several embodiments of the mobile terminal **10** are illustrated and will be hereinafter described for purposes of example, other types of mobile terminals, such as portable digital assistants (PDAs), pagers, mobile televisions, MP3 or other music players, cameras, laptop computers and other types of voice and text communications systems, can readily employ the present invention.

In addition, while several embodiments of the present invention will benefit a mobile terminal **10** as described below, embodiments of the present invention may also benefit and be practiced by other types of devices, i.e., fixed terminals. Moreover, the system and method of embodiments of the present invention will be primarily described in conjunction with mobile communications applications. It should be understood, however, that the system and method of the present invention can be utilized in conjunction with a variety of other applications, both in the mobile communications industries and outside of the mobile communications industries. Accordingly, embodiments of the present invention should not be construed as being limited to applications in the mobile communications industry.

In one embodiment, however, the device that stores the data (both content data and metadata) to be transferred is a mobile terminal **10.** Although the mobile terminal may be embodied in different manners, the mobile terminal **10** of one embodiment includes an antenna **12** in operable communication with a transmitter **14** and a receiver **16.** The mobile terminal **10** further includes a controller **20** or other processing element that provides signals to and receives signals from the transmitter **14** and receiver **16,** respectively. The signals include signaling information in accordance with the air interface standard of the applicable cellular system, and also user speech and/or user generated data. In this regard, the mobile terminal **10** is capable of operating with one or more air interface standards, communication protocols, modulation types, and access types. By way of illustration, the mobile terminal **10** is capable of operating in accordance with any of a number of first, second and/or third-generation communication protocols or the like. For example, the mobile terminal **10** may be capable of operating in accordance with second-generation (2G) wireless communication protocols IS-136 (TDMA), GSM, and IS-95 (CDMA) or third-generation wireless communication protocol Wideband Code Division Multiple Access (WCDMA).

It is understood that the controller **20** includes circuitry required for implementing audio and logic functions of the mobile terminal **10.** For example, the controller **20** may be comprised of a digital signal processor device, a microprocessor device, and various analog to digital converters, digital to analog converters,-and other support circuits. Control and signal processing functions of the mobile terminal **10** are allocated between these devices according to their respective capabilities. The controller **20** thus may also include the functionality to convolutionally encode and interleave message and data prior to modulation and transmission. The controller **20** can additionally include an internal voice coder, and may include an internal data modem. Further, the controller **20** may include functionality to operate one or more software programs, which may be stored in memory. For example, the controller **20** may be capable of operating a connectivity program, such as a conventional Web browser. The connectivity program may then allow the mobile terminal **10** to transmit and receive Web content, such as location-based content, according to a Wireless Application Protocol (WAP), for example.

The mobile terminal **10** of this embodiment also comprises a user interface including an output device such as a conventional earphone or speaker **24,** a ringer **22,** a microphone **26,** a display **28,** and a user input interface, all of which are coupled to the controller **20.** The user input interface, which allows the mobile terminal **10** to receive data, may include any of a number of devices allowing the mobile terminal **10** to receive data, such as a keypad **30,** a touch display (not shown) or other input device. In embodiments including the keypad **30,** the keypad **30** includes the conventional numeric (0-9) and related keys (#, *), and other keys used for operating the mobile terminal **10.** The mobile terminal **10** further includes a battery **34,** such as a vibrating battery pack, for powering various circuits that are required to operate the mobile terminal **10,** as well as optionally providing mechanical vibration as a detectable output.

The mobile terminal **10** may further include a user identity module (UIM) **38.** The UIM **38** is typically a memory device having a processor built in. The UIM **38** may include, for example, a subscriber identity module (SIM), a universal integrated circuit card (UICC), a universal subscriber identity module (USIM), a removable user identity module (R-UIM), etc. The UIM **38** typically stores information elements related to a mobile subscriber. In addition to the UIM **38,** the mobile terminal **10** may be equipped with memory. For example, the mobile terminal **10** may include volatile memory **40,** such as volatile Random Access Memory (RAM) including a cache area for the temporary storage of data. The mobile terminal **10** may also include other non-volatile memory **42,** which can be embedded and/or may be removable. The non-volatile memory **42** can additionally or alternatively comprise an EEPROM, flash memory or the like, such as that available from the SanDisk Corporation of Sunnyvale, California, or Lexar Media Inc. of Fremont, California. The memories can store any of a number of pieces of information, and data, used by the mobile terminal **10** to implement the functions of the mobile terminal **10.** For example, the memories can include an identifier, such as an international mobile equipment identification (IMEI) code, capable of uniquely identifying the mobile terminal **10.**

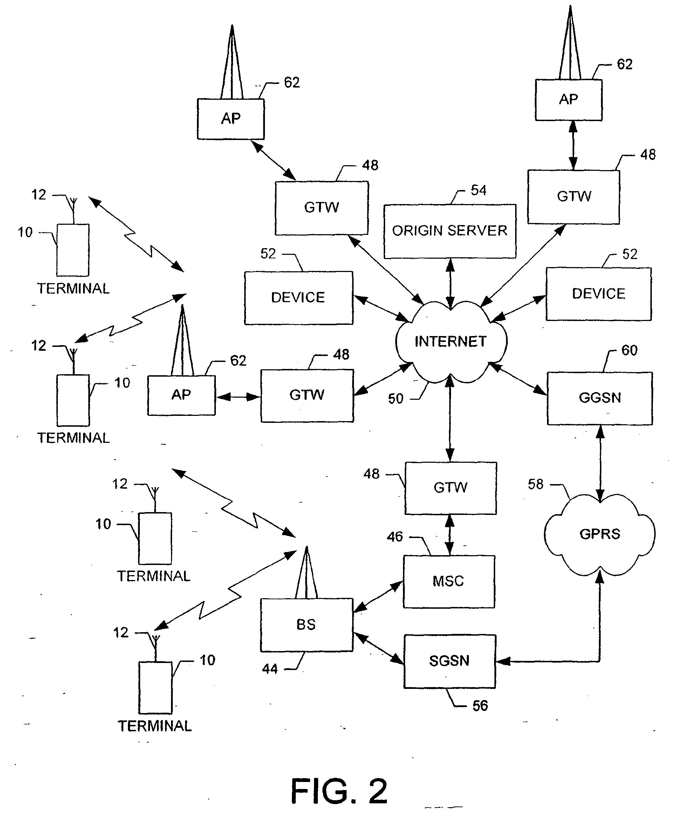

Referring now to Fig. 2, an illustration of one type of system that would benefit from and otherwise support embodiments of the present invention is provided. As shown, one or more mobile terminals **10** may each include an antenna **12** for transmitting signals to and for receiving signals from a base site or base station (BS) **44.** The base station **44** may be a part of one or more cellular or mobile networks each of which includes elements required to operate the network, such as a mobile switching center (MSC) **46.** As well known to those skilled in the art, the mobile network may also be referred to as a Base Station/MSC/Interworking function (BMI). In operation, the MSC **46** is capable of routing calls to and from the mobile terminal **10** when the mobile terminal **10** is making and receiving calls. The MSC **46** can also provide a connection to landline trunks when the mobile terminal **10** is involved in a call. In addition, the MSC **46** can be capable of controlling the forwarding of messages to and from the mobile terminal **10,** and can also control the forwarding of messages for the mobile terminal **10** to and from a messaging center. It should be noted that although the MSC **46** is shown in the system of Fig. 2, the MSC **46** is merely an exemplary network device and embodiments of the present invention are not limited to use in a network employing an MSC.

The MSC **46** can be coupled to a data network, such as a local area network (LAN), a metropolitan area network (MAN), and/or a wide area network (WAN). The MSC **46** can be directly coupled to the data network. In one typical embodiment, however, the MSC **46** is coupled to a GTW **48,** and the GTW **48** is coupled to a WAN, such as the Internet **50.** In turn, devices such as processing elements (e.g., personal computers, server computers or the like) can be coupled to the mobile terminal **10** via the Internet **50.** For example, as explained below, the processing elements can include one or more processing elements associated with a device **52** (two shown in Fig. 2), origin server **54** (one shown in Fig. 2) or the like, as described below.

The BS **44** can also be coupled to a signaling GPRS (General Packet Radio Service) support node (SGSN) **56.** As known to those skilled in the art, the SGSN **56** is typically capable of performing functions similar to the MSC **46** for packet switched services. The SGSN **56,** like the MSC **46,** can be coupled to a data network, such as the Internet **50.** The SGSN **56 can** be directly coupled to the data network. In a more typical embodiment, however, the SGSN **56** is coupled to a packet-switched core network, such as a GPRS core network **58.** The packet-switched core network is then coupled to another GTW **48,** such as a GTW GPRS support node (GGSN) **60,** and the GGSN **60** is coupled to the Internet **50.** In addition to the GGSN **60,** the packet-switched core network can also be coupled to a GTW **48.** Also, the GGSN **60** can be coupled to a messaging center. In this regard, the GGSN **60** and the SGSN **56,** like the MSC **46,** may be capable of controlling the forwarding of messages, such as MMS messages. The GGSN **60** and SGSN **56** may also be capable of controlling the forwarding of messages for the mobile terminal **10** to and from the messaging center.

In addition, by coupling the SGSN **56** to the GPRS core network **58** and the GGSN **60,** devices such as a device **52** and/or origin server **54** may be coupled to the mobile terminal **10** via the Internet **50,** SGSN **56** and GGSN **60.** In this regard, devices such as the device **52** and/or origin server **54** may communicate with the mobile terminal **10** across the SGSN **56,** GPRS core network **58** and the GGSN **60.** By directly or indirectly connecting mobile terminals **10** and the other devices (e.g., device **52,** origin server **54,** etc.) to the Internet **50,** the mobile terminals **10** may communicate with the other devices and with one another, such as according to the Hypertext Transfer Protocol (HTTP), to thereby carry out various functions of the mobile terminals **10.**

Although not every element of every possible mobile network is shown and described herein, it should be appreciated that the mobile terminal **10** may be coupled to one or more of any of a number of different networks through the BS **44.** In this regard, the network(s) can be capable of supporting communication in accordance with any one or more of a number of first-generation (1G), second-generation (2G), 2.5G, third-generation (3G) and/or future mobile communication protocols or the like. For example, one or more of the network(s) can be capable of supporting communication in accordance with 2G wireless communication protocols IS-136 (TDMA), GSM, and IS-95 (CDMA). Also, for example, one or more of the network(s) can be capable of supporting communication in accordance with 2.5G wireless communication protocols GPRS, Enhanced Data GSM Environment (EDGE), or the like. Further, for example, one or more of the network(s) can be capable of supporting communication in accordance with 3G wireless communication protocols such as Universal Mobile Telephone System (UMTS) network employing Wideband Code Division Multiple Access (WCDMA) radio access technology. Some narrow-band AMPS (NAMPS), as well as TACS, network(s) may also benefit from embodiments of the present invention, as should dual or higher mode mobile stations (e.g., digital/analog or TDMA/CDMA/analog phones).

The mobile terminal **10** can further be coupled to one or more wireless access points (APs) **62.** The APs **62** may comprise access points configured to communicate with the mobile terminal **10** in accordance with techniques such as, for example, radio frequency (RF), Bluetooth (BT), infrared (IrDA) or any of a number of different wireless networking techniques, including wireless LAN (WLAN) techniques such as IEEE 802.11 (e.g., 802.11a, 802.11b, 802.11g, 802.11n, etc.), WiMAX techniques such as IEEE 802.16, and/or ultra wideband (UWB) techniques such as IEEE 802.15 or the like. The APs **62** may be coupled to the Internet **50.** Like with the MSC **46,** the APs **62** can be directly coupled to the Internet **50.** In one embodiment, however, the APs **62** are indirectly coupled to the Internet **50** via a GTW **48.** Furthermore, in one embodiment, the BS **44** may be considered as another AP **62.** As will be appreciated, by directly or indirectly connecting the mobile terminals **10** and the device **52,** the origin server **54,** and/or any of a number of other devices, to the Internet **50,** the mobile terminals **10** can communicate with one another, the device, etc., to thereby carry out various functions of the mobile terminals **10,** such as to transmit data, content or the like to, and/or receive content, data or the like from, the device **52.** As used herein, the terms "data," "content," "information" and similar terms may be used interchangeably to refer to data capable of being transmitted, received and/or stored in accordance with embodiments of the present invention. Thus, use of any such terms should not be taken to limit the scope of the present invention.

Although not shown in Fig. 2, in addition to or in lieu of coupling the mobile terminal **10** to devices **52** across the Internet **50,** the mobile terminal **10** and device **52** may be coupled to one another and communicate in accordance with, for example, RF, BT, IrDA or any of a number of different wireline or wireless communication techniques, including LAN, WLAN, WiMAX and/or UWB techniques. One or more of the devices **52** can additionally, or alternatively, include a removable memory capable of storing content, which can thereafter be transferred to the mobile terminal **10.** Further, the mobile terminal **10** can be coupled to one or more electronic devices, such as printers, digital projectors and/or other multimedia capturing, producing and/or storing devices (e.g., other terminals). Like with the devices **52,** the mobile terminal **10** may be configured to communicate with the portable electronic devices in accordance with techniques such as, for example, RF, BT, IrDA or any of a number of different wireline or wireless communication techniques, including USB, LAN, WLAN, WiMAX and/or UWB techniques.

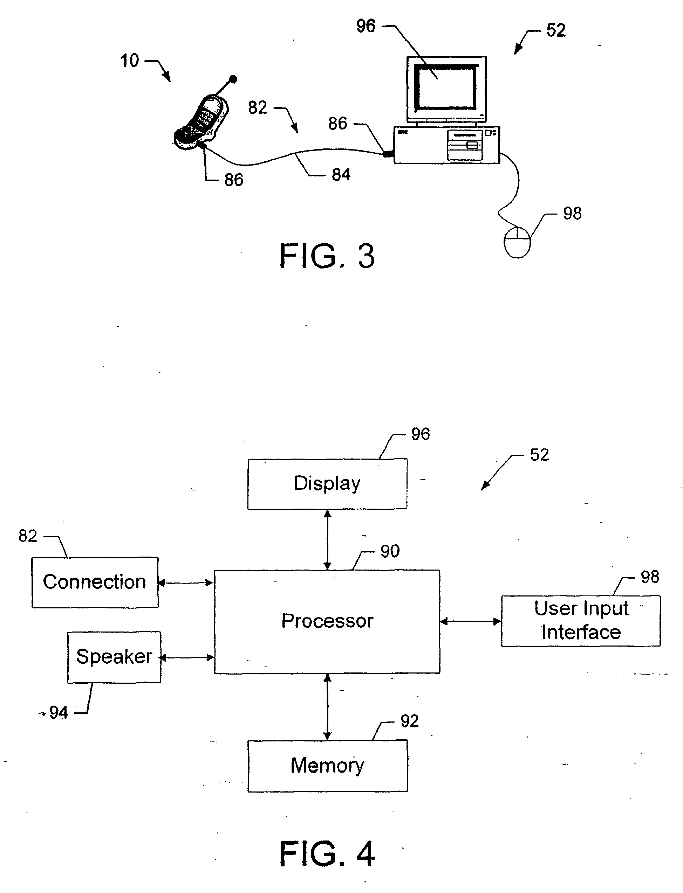

An exemplary embodiment of the invention will now be described with reference to Fig. 3, in which certain elements of a system for accessing metadata are displayed. The system of Fig. 3 may be employed, for example, with the mobile terminal **10** of Fig. 1 or other devices **52** depicted generally in Fig. 2. However, it should be noted that the system of Fig. 3, may also be employed with a variety of other devices, both mobile and fixed, and therefore, embodiments of the present invention should not be limited to use with devices such as the mobile terminal **10** of Fig. 1 or the devices **52** communicating via the network of Fig. 2.

In an exemplary embodiment, content or data may be communicated over the network of Fig. 2 between a first device, such as the mobile terminal **10** of Figs. 1 and 2, and a second device **52** or other network device of the system of Fig. 2. However, it should be understood that the network of Fig. 2 need not be employed for communication between the first and second devices, but rather Fig. 2 is merely provided for purposes of example. Furthermore, it should be understood that embodiments of the present invention may be embodied in software as described below that may be resident on a first device such as the mobile terminal **10,** and/or may be resident on a second device, such as device **52** or other network device accessible by the first device.

Referring now to Fig. 3, a system for accessing metadata from a first device, such as a mobile terminal, is provided. The system of this exemplary embodiment includes a mobile terminal **10** configured to store data, a second device (such as a device **52** of Fig. 2, which may be embodied as a personal computer, a server, or the like) configured to communicate with the mobile terminal **10,** and a connection **82,** such as Universal Serial Bus (USB) connection, configured to support communications between the mobile terminal **10** and the device **52.** As shown, the connection **82** may be accomplished using a USB cable **84** and connectors **86** that are engaged by ports defined by the device **52** and the mobile terminal **10** (or other device), or via other types of wired or wireless connections, e.g., Bluetooth, WLAN, etc. In a wireless connection, the connection may include transceivers in the device **52** and the mobile terminal **10** (or other device) for supporting the wireless communication between the device and the mobile terminal.

The device **52** includes various means for performing one or more functions in accordance with exemplary embodiments of the present invention, including those more particularly shown and described herein. It should be understood, however, that the devices may include alternative means for performing one or more like functions, without departing from the spirit and scope of the present invention. More particularly, for example, as shown in Fig. 4, the device **52** can include a processor **90** connected to a memory **92.** The memory **92** can comprise volatile and/or non-volatile memory, and typically stores content, data or the like. For example, the memory typically stores content transmitted from, and/or received by, the device **52.** Also for example, the memory **92** typically stores applications, instructions or the like for the processor **90** to perform steps associated with operation of the entity in accordance with embodiments of the present invention. As such, one means for performing the various functions of the device **52** that are described below may be embodied by the processor **90** or like processing element operating under control of a software application, instruction, or the like.

In addition to the memory **92,** the processor **90** can also be connected to at least one interface or other means for displaying, transmitting and/or receiving data; content or the like. In this regard, the interface(s) can include at least one communication interface, such as a USB connection **82,** or other means for transmitting and/or receiving data, content or the like. As explained below, for example, the communication interface(s) can include a first communication interface for connecting to a first network, and a second communication interface for connecting to a second network. In addition to the communication interface(s), the interface(s) can also include at least one user interface that can include one or more earphones and/or speakers **94,** a display **96,** and/or a user input interface **98.** The user input interface, in turn, can comprise any of a number of devices allowing the device **52** to receive data from a user, such as a microphone, a keypad, a touch display, a joystick or other input device.

Referring again to Fig. 3, the device **52** is configured to issue a command to the mobile terminal **10** via the connection **82** to access metadata embedded in or otherwise associated with the content data stored on the mobile terminal **10.** The content data stored on the mobile terminal **10** may include a number of types of files, including MP3, M4A, WMA, AAC, WAV, and JPEG files, among others. The content data may have been downloaded or copied onto the mobile **t**erminal **10** from a number of locations. For example, JPEG files may have been transmitted to the mobile terminal **10** from another terminal, such as through a picture message or an image generated by an integrated camera. Alternatively, MP3 music files may have-been accessed by the mobile terminal **10** through the Internet **50.**

In some embodiments, the mobile terminal **10** is connected to a device **52** in order to transfer content data stored on the mobile terminal **10,** such as the MP3 or JPEG file, to the device **52.** For example, JPEG picture files stored on the mobile terminal **10** may be transferred to a personal computer for more permanent storage or for further development using applications not available on the mobile terminal **10.** Similarly, in other embodiments, the mobile terminal **10** is connected to the device **52** in order to transfer content data stored on the device **52** to the mobile terminal **10**. For example, MP3 files may be accessed from the Internet **50** by a personal computer and transferred to the mobile terminal **10** for more convenient access or storage of the file.

In any case, it may be necessary or desirable to have an overview of or otherwise determine various parameters associated with the content data stored on the mobile terminal **10** by accessing the metadata associated with and intrinsic to the content data. For example, prior to transferring content from the mobile terminal **10** to the device **52,** it may be helpful to verify through the review of the metadata what content is stored on the mobile terminal **10.** Likewise, after transferring content from the device **52** to the mobile terminal **10,** it may be helpful to confirm that the transfer was successful by viewing certain details relating to the content data stored on the mobile terminal **10** that are contained in the metadata. For instance, a user may want to generate a playlist on a personal computer using music files she may have stored on her mobile phone.

The metadata intrinsic to the content data may vary, depending on the type of content data involved, and the location of the metadata in the content data may also differ. For example, in JPEG files, the metadata may include information regarding the shutter and exposure of the image, as well as a thumbnail of the image. This information, for instance, may be located in the EXIF header at the beginning of the JPEG content file. In MP3 and M4A files, however, the metadata may include information regarding the title, artist, and album of the content data. For MP3 content data, this metadata may be located in ID3 tags that, depending on the version of the ID3 tag, may be at the end of the file.

In instances in which the data including both the content data and the metadata are stored on the mobile terminal **10,** the mobile terminal **10** may be able to access the metadata when parsing the content data independently of the connection with the device **52,** thereby allowing a user of the mobile terminal **10** to view the metadata associated with the content stored on the mobile terminal **10.** However, the mobile terminal **10** may not support commands from a device **52** (such as a personal computer) requesting the same information. For example, the device **52** may use a communications protocol, such as Media Transfer Protocol (MTP), to transfer files between the device **52** and the mobile terminal **10.** Although the mobile terminal **10** may be able to support the transfer of the entire file (including both content data and metadata) according to MTP, the mobile terminal **10** may not have the capability to support a request for the metadata alone. In other words, the full set of operations specified by MTP may not be supported by the mobile terminal **10.** As a result, when the mobile terminal **10** and the device **52** are interfacing, the device **52** may be unable to access the metadata stored on the mobile terminal **10** without accessing the complete content file.

Thus, the device **52** of some embodiments is configured to issue a command to the mobile terminal **10** via the connection **82** specifying a position in the data and an amount of data to be transferred. Furthermore, the device **52** is configured to receive from the mobile terminal **10** a portion of the data including the metadata (but not all of the content data) according to the command and to parse the portion of the data received to segregate and access the metadata. In this way, only the portion of the content file including the metadata may be transferred from the mobile terminal **10** to the device **52,** allowing the device **52** to access the metadata faster than if the entire content file had to be transferred.

As an example, an MP3 file may have about 1 MB of content data, including intrinsic metadata. The metadata portion of the file, however, may only include 1 kB of data. Thus, in this case, because the metadata is only 1/1000 the size of the complete file, transferring only the metadata would generally require 1/1000 of the time it would take to transfer the complete file (content data and metadata). Therefore, depending on the size of the content file, the time saved by accessing only the metadata without transferring the content data in its entirety may be significant. Also, the time required by the device **52** to parse 1 kB of data (i.e., the metadata alone) is generally significantly less than the time required by the device **52** to parse 1 MB. Furthermore, the device **52** may generally be expected to include parsing capabilities as part of supporting other functionality of the device **52.** For example, a media player on a personal computer is generally able to parse and display the metadata of files stored locally on the computer; thus, the existing capabilities of the personal computer via the media player may also be able to parse metadata received from non-locally stored files.

In some embodiments, the device **52** may be configured to determine the type of content data stored on the mobile terminal **10** prior to issuing the command to institute the transfer. For example, the **device 52** may be configured to determine that the metadata of interest is associated with MP3 content data. The device **52** may, for example, analyze the file extension, query the mobile terminal **10,** or transfer and parse a sample of the file to determine the type of content data of interest to the user.

Furthermore, the device **52** and, more typically, the processor **90** of the device **52** may be configured to specify the amount of data to be transferred and the position in the data from which to transfer the specified amount according to the type of content data (e.g., based on the standard location of metadata for the particular file type). For example, if the device **52** determines that the content data is MP3 content with a particular version of ID3 tags for which the standard location for metadata is at the beginning of the file, the device **52** may be configured to specify the transfer of 1 kB of data from the beginning of the data. If the device **52** determines that the MP3 content data has another version of ID3 tags for which the metadata does not have a fixed length, the device **52** may be configured to estimate the amount of data and the position in the data from which to transfer the amount according to the type of content data. For example, a particular file type may have an average metadata size that ranges from 0.5 kB to 3 kB and is generally located at the end of the content data. In this case, the device **52** may estimate that the metadata has a size equal to the maximum of the range and thus specify the transfer of 3 kB from the end of the content data. If the estimate does not capture all of the metadata, another estimate may be made (e.g., including a greater amount of the data) for another transfer. The device **52** may determine that the initial estimate was inadequate, for example, by looking for certain binary content in the portion of data transferred, which may indicate the beginning and/or the end of metadata content.

In some cases, the device **52** may look up the file type extension on a server or the Internet to obtain information regarding the metadata. This information may include the location of the metadata, the length of the metadata (including whether the metadata has a fixed length or not and possible ranges for the length of the metadata), as well as the type of metadata associated with the file, including how to read or parse the metadata.

In other embodiments, the device **52** may be configured to determine the total size of the data stored on the mobile terminal **10,** for example by querying the mobile terminal **10** for a file size. Based on the total size of the file, the device **52** may be configured to estimate the amount of data to be transferred. For example, the device may be configured to estimate that 1/1000 of the total file size is metadata. Alternatively, the device **52** may consider the total file size in conjunction with the file type to estimate the portion of the data that is metadata. In estimating the amount of data to transfer from the mobile terminal **10** to the device **52** to access the metadata, parts of the data having no embedded metadata may be transferred in addition to the metadata. In other words, a portion of the data that is larger than just the metadata may be transferred. However, the transfer of the portion should still be achieved significantly faster than the transfer of the entire file, and unwanted portions of the content file may be parsed or separated from the metadata by the device **52** and disregarded. Thus the metadata may be accessed more quickly than through transfer of the entire content file.

Referring to Fig. 4, the device **52** may include means, such as a display **96,** configured to present the accessed metadata in a user-readable format. For example, the song title, artist, album, and duration of an MP3 file may be presented in tabular form on the display **96** once the device **52** has accessed and parsed the metadata associated with the content data stored on the mobile terminal **10.**

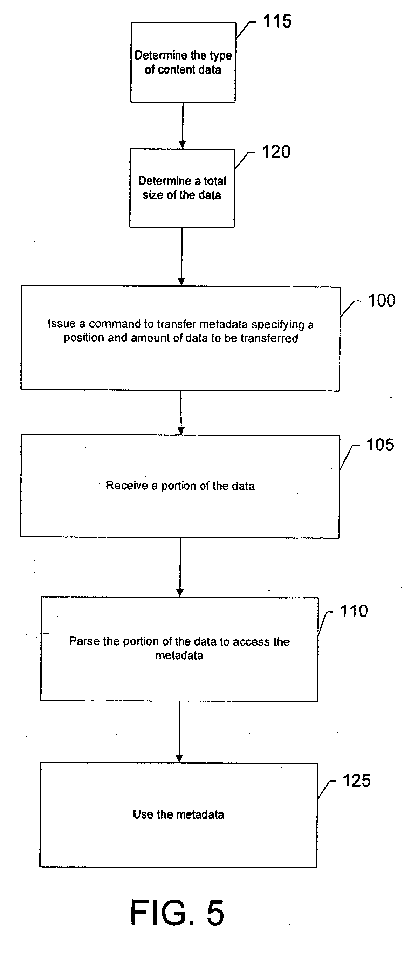

In other embodiments, a method for accessing metadata from a device, such as a mobile terminal, is provided. Referring to Fig. 5, a command to transfer metadata is issued to a device storing data including the metadata and content data. A portion of the data, including the metadata but less than the content data, is then received from the device. The portion of the data received is then parsed to access the metadata. See Fig. 5, blocks **100-110.** As previously discussed, the content data stored on the device, such as a mobile terminal, may include MP3, M4A, JPEG, and other types of files that may have been downloaded or copied onto the device.

The command issued to the device storing the data may specify a position in the data and an amount of data to be transferred. The position may be an absolute position in the data from which to transfer the data, or it may be a position _ relative to which to transfer the data. As described above, the command may be issued using Media Transfer Protocol (MTP) or other suitable communications protocols. For example, the MTP operation "GetPartialObject" may allow for the specification of a position and data size, which may be used to transfer data. In other protocols, the command may need to be specified.

In some embodiments, the type of content data stored by the device may be determined prior to issuing the command to transfer the metadata. Block **115.** The command may specify a predetermined amount of data to be transferred and the position in the data relative to which to transfer the predetermined amount according-to the type of content data stored by the device. For example, if the type of content data is determined to be MP3 content (or any other content type having fixed-length metadata), a predetermined amount of data (such as 1kB) may be specified in the command, as well as a position specifying that the transfer be made from the end of the file (for example). Alternatively, the amount of data to be transferred and the position in the data relative to which to transfer the amount may be estimated according to the type of content data, such as for metadata not having a fixed length.

Furthermore, a total size of the data stored by the device may be determined, as shown in block **120.** The amount of data to be transferred may then be estimated and specified in the command according to the total size of the data. For example, as previously discussed, a certain percentage of the total file size may be included in the estimate as the amount of data to be transferred. In addition, the total file size may be considered in conjunction with the file type in forming the estimate. Although such estimates may result in the transfer of some, but not all, of the content data along with the metadata, transfer of the portion should still be achieved in less time than transfer of the entire file. Unwanted portions of the content file may then be parsed or separated from the metadata and disregarded in block **110.** -

In some embodiments, the accessed metadata may used, as shown in block **125.** For example, attributes of the file included in the metadata, such as the file size, title, author, and/or other file-specific information, may be displayed in a user-readable format such that a user may read the information. As another example, the metadata may be sent to another device, such as a computer or mobile terminal, for further processing or display.

Exemplary embodiments of the present invention have been described above with reference to block diagrams and flowchart illustrations of methods, apparatuses, and computer program products. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that can direct a computer or other programmable data processing apparatus, such as the processor **90** (shown in Fig. 4), to function in a particular manner, such that the instructions stored in the computer-readable memory produce an article of manufacture including computer-readable instructions for implementing the function specified in the flowchart block or blocks illustrated in Fig. 5. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method comprising:
issuing a command (100) to a device (10) in order, to transfer metadata, the device storing data comprising the metadata and content data, wherein the command specifies an amount of the data to be transferred and a position in the data from which specified amount of data is to be transferred;
receiving (105) from the device a portion of the data including the metadata but less than all the content data in response to the command; and
parsing (110) the portion of the data received to access the metadata.

2. The method of Claim 1, wherein issuing the command comprises issuing the command using a Media Transfer Protocol, MTP.

3. The method of Claim 1 further comprising determining the type of content data stored by the device.

4. The method of Claim 3, wherein issuing the command comprises specifying a predetermined amount of data to be transferred and the position in the data relative to which to transfer the predetermined amount according to the type of content data stored by the device.

5. The method of Claim 3 further comprising estimating the amount of data to be transferred and the position in the data relative to which to transfer the amount according to the type of data stored by the device.

6. The method of Claim 1 further comprising determining a total size of the data stored by the device.

7. The method of Claim 6 further comprising estimating the amount of data to be transferred according to the total size of the data stored by the device.

8. The method of Claim 1 further comprising using the accessed metadata.

9. An apparatus (52) comprising:
means for issuing a command to a device (10) in order to transfer metadata, the device storing data comprising the metadata and content data, wherein the command specifies an amount of the data to be transferred and a position in the data from which the specified amount of data is to be transferred;
means for receiving from the device a portion of the data including the metadata but less than all the content data in response to the command; and
means for parsing the portion of the data received to access the metadata.

10. The apparatus of Claim 9 further comprising means for displaying the accessed metadata in a user-readable format.

11. The apparatus of claim 9 further comprising means for performing the method of any of claims 2 to 8.

12. A computer program product comprising at least one computer-readable storage medium having computer-readable program code portions stored therein, the computer-readable program code portions comprising:
a first executable portion which when executed on a computer issues a command to a device (10) in order to transfer data comprising metadata, the device storing data comprising the metadata and content data, wherein the command specifies an amount of the data to be transferred and a position in the data from which the specified amount of data is to be transferred,
a second executable portion which when executed on a computer receives from the device a portion of the data including the metadata but less than all the content data in response to the command; and
a third executable portion which when executed on a computer parses the portion of the data received to access the metadata.

13. The computer program product of Claim 12 further comprising a fourth executable portion which when executed on a computer determines the type of content data stored by the device.

14. The computer program product of Claim 13, wherein the first executable portion is further configured, when executed on a computer, to specify a predetermined amount of data to be transferred and the position in the data relative to which to transfer the predetermined amount according to the type of content data stored by the device.

15. A system comprising:
a first device (10) configured to store data comprising metadata and content data;
a second device (52) configured to communicate with the first device; and
a connection configured to support communications between the first device and the second device;
wherein the second device is configured to issue a command to the first device the connection specifying and a position in the data from which the specified amount of data is to be transferred an amount of data to be transferred , to receive a portion of the data including the metadata but less than all the content data from the first device in response to the command, and to parse the portion of the data received to access the metadata.

## Patentansprüche

1. Verfahren, umfassend:
Ausgeben eines Befehls (100) an eine Vorrichtung (10), um Metadaten zu übertragen, wobei die Vorrichtung Daten speichert, welche die Metadaten und Inhaltsdaten umfassen, wobei der Befehl eine zu übertragende Datenmenge und eine Position in den Daten angibt, von der die angegebene Datenmenge übertragen werden soll;
Empfangen (105), von der Vorrichtung, eines Teils der Daten einschließlich der Metadaten, jedoch weniger als alle Inhaltsdaten, in Reaktion auf den Befehl; und
Analysieren (110) des empfangenen Teils der Daten, um auf die Metadaten zuzugreifen.

2. Verfahren nach Anspruch 1, wobei das Ausgeben des Befehls umfasst, den Befehl unter Verwendung eines Media Transfer Protocols, MTP, auszugeben.

3. Verfahren nach Anspruch 1, weiter umfassend Bestimmen des Typs von Inhaltsdaten, die von der Vorrichtung gespeichert werden.

4. Verfahren nach Anspruch 3, wobei das Ausgeben des Befehls das Angeben einer vorbestimmten zu übertragenden Datenmenge und der Position in den Daten umfasst, in Bezug auf welche die vorbestimmte Menge übertragen werden soll, gemäß dem Typ von Inhaltsdaten, die von der Vorrichtung gespeichert werden.

5. Verfahren nach Anspruch 3, weiter umfassend Abschätzen der zu übertragenden Datenmenge und der Position in den Daten, in Bezug auf welche die vorbestimmte Menge übertragen werden soll, gemäß dem Typ von Inhaltsdaten, die von der Vorrichtung gespeichert werden.

6. Verfahren nach Anspruch 1, weiter umfassend das Bestimmen einer Gesamtgröße der Daten, die von der Vorrichtung gespeichert werden.

7. Verfahren nach Anspruch 6, weiter umfassend Abschätzen der zu übertragenden Datenmenge gemäß der Gesamtgröße der Daten, die von der Vorrichtung gespeichert werden.

8. Verfahren nach Anspruch 1, weiter umfassend das Benutzen der Metadaten, auf die zugegriffen wurde.

9. Vorrichtung (52), umfassend:
Mittel zum Ausgeben eines Befehls an eine Vorrichtung (100), um Metadaten zu übertragen, wobei die Vorrichtung Daten speichert, welche Metadaten und
Inhaltsdaten umfassen, wobei der Befehl eine zu übertragende Datenmenge und eine Position in den Daten angibt, von der die angegebene Datenmenge übertragen werden soll;
Mittel zum Empfangen eines Teils der Daten einschließlich der Metadaten, aber weniger als alle Inhaltsdaten, in Reaktion auf den Befehl, von der Vorrichtung; und
Mittel zum Analysieren des Teils der empfangenen Daten, um auf die Metadaten zuzugreifen.

10. Vorrichtung nach Anspruch 9, weiter umfassend Mittel zum Anzeigen der Metadaten, auf die zugegriffen wurde, in einem benutzerlesbaren Format.

11. Vorrichtung nach Anspruch 9, weiter umfassend Mittel zum Ausführen des Verfahrens nach einem der Ansprüche 2 bis 8.

12. Computerprogrammprodukt, umfassend mindestens ein computerlesbares Speichermedium mit darauf gespeicherten computerlesbaren Programmcodeteilen, wobei die computerlesbaren Programmcodeteile umfassen:
einen ersten ausführbaren Teil, der, wenn er auf einem Computer ausgeführt wird, einen Befehl an eine Vorrichtung (10) ausgibt, Daten zu übertragen, die Metadaten umfassen, wobei die Vorrichtung Daten speichert, welche die Metadaten und Inhaltsdaten umfassen, wobei der Befehl eine zu übertragende Datenmenge und eine Position in den Daten angibt, von der die angegebene Datenmenge übertragen werden soll,
einen zweiten ausführbaren Teil, der, wenn er auf einem Computer ausgeführt wird, von der Vorrichtung einen Teil der Daten einschließlich der Metadaten, aber weniger als alle Inhaltsdaten, in Reaktion auf den Befehl empfängt; und
einen dritten ausführbaren Teil, der, wenn er auf einem Computer ausgeführt wird, den Teil der empfangenen Daten analysiert, um auf die Metadaten zuzugreifen.

13. Computerprogrammprodukt nach Anspruch 12, weiter umfassend einen vierten ausführbaren Teil, der, wenn er auf einem Computer ausgeführt wird, den Typ der von der Vorrichtung gespeicherten Inhaltsdaten bestimmt.

14. Computerprogrammprodukt nach Anspruch 13, wobei der erste ausführbare Teil weiter dazu eingerichtet ist, wenn er auf einem Computer ausgeführt wird, eine vorbestimmte Menge zu übertragender Daten anzugeben und die Position in den Daten, in Bezug auf welche die vorbestimmte Menge übertragen werden soll, gemäß dem Typ von Inhaltsdaten, die von der Vorrichtung gespeichert werden.

15. System, umfassend:
eine erste Vorrichtung (10), eingerichtet zum Speichern von Daten, welche Metadaten und Inhaltsdaten umfassen;
eine zweite Vorrichtung (52), eingerichtet zum Kommunizieren mit der ersten Vorrichtung; und
eine Verbindung, eingerichtet zum Unterstützen von Kommunikation zwischen der ersten Vorrichtung und der zweiten Vorrichtung;
wobei die zweite Vorrichtung dazu eingerichtet ist, einen Befehl an die erste Vorrichtung über die Verbindung auszugeben, welcher eine zu übertragende Datenmenge und eine Position in den Daten angibt, von der die angegebene Datenmenge übertragen werden soll, einen Teil der Daten einschließlich der Metadaten aber weniger als alle Inhaltsdaten in Reaktion auf den Befehl von der ersten Vorrichtung zu empfangen, und den empfangenen Teil der Daten zu analysieren, um auf die Metadaten zuzugreifen.

## Revendications

1. Procédé comprenant les étapes consistant à :
émettre une commande (10c) vers un dispositif (10) de manière à transférer des métadonnées, le dispositif stockant des données comprenant les métadonnées et les données de contenu, où la commande spécifie une quantité des données à transférer et une position dans les données à partir de laquelle la quantité spécifiée de données doit être transférée,
recevoir (105), depuis le dispositif, une partie des données comprenant les métadonnées, mais moins que toutes les données de contenu, en réponse à la commande ; et
analyser (110) la partie de données reçues afin d'accéder aux métadonnées.

2. Procédé selon la revendication 1, dans lequel l'émission de la commande comprend d'émettre la commande à l'aide d'un protocole de transfert média, MTP.

3. Procédé selon la revendication 1, comprenant en outre de déterminer le type de données de contenu stocké par le dispositif.

4. Procédé selon la revendication 3, dans lequel l'émission de la commande comprend de spécifier une quantité prédéterminée de données à transférer et la position dans les données par rapport à laquelle transférer la quantité prédéterminée selon le type de données de contenu stockées par le dispositif.

5. Procédé selon la revendication 3, comprenant en outre d'estimer la quantité de données à transférer et la position dans les données par rapport à laquelle transférer la quantité en fonction du type de données stockées par le dispositif.

6. Procédé selon la revendication 1, comprenant en outre de déterminer la taille totale des données stockées par le dispositif.

7. Procédé selon la revendication 6, comprenant en outre d'estimer la quantité de données à transférer en fonction de la taille totale des données stockées par le dispositif.

8. Procédé selon la revendication 1, comprenant en outre d'utiliser les métadonnées accédées.

9. Appareil (52) comprenant :
un moyen destiné à émettre une commande vers un dispositif (10) de manière à transférer des métadonnées, le dispositif stockant des données comprenant les métadonnées et les données de contenu, où la commande spécifie une quantité des données à transférer et une position dans les données à partir de laquelle la quantité spécifiée de données doit être transférée,
un moyen destiné à recevoir, depuis le dispositif, une partie des données comprenant les métadonnées, mais moins que toutes les données de contenu, en réponse à la commande ; et
un moyen pour analyser la partie de données reçues afin d'accéder aux métadonnées.

10. Appareil selon la revendication 9, comprenant en outre un moyen pour afficher les métadonnées accédées dans un format lisible par l'utilisateur.

11. Appareil selon la revendication 9, comprenant en outre un moyen pour exécuter le procédé selon les revendications 2 à 8.

12. Produit de programme d'ordinateur comprenant au moins un support de stockage lisible par un ordinateur sur lequel sont stockées des parties de code de programme lisibles par un ordinateur, les parties de code de programme lisibles par un ordinateur comprenant :
une première partie exécutable qui, lorsqu'elle est exécutée sur un ordinateur, émet une commande vers un dispositif (10) pour transférer des données comprenant des métadonnées, le dispositif stockant des données comprenant les métadonnées et les données de contenu, où la commande spécifie une quantité des données à transférer et une position dans les données à partir de laquelle la quantité spécifiée de données doit être transférée,
une seconde partie exécutable qui, lorsqu'elle est exécutée sur un ordinateur, reçoit depuis le dispositif une partie des données comprenant les métadonnées, mais moins que toutes les données de contenu, en réponse à la commande ; et
une troisième partie exécutable qui, lorsqu'elle est exécutée sur un ordinateur, analyse la partie de données reçues afin d'accéder aux métadonnées.

13. Produit de programme d'ordinateur selon la revendication 12, comprenant en outre une quatrième partie exécutable qui, lorsqu'elle est exécutée sur un ordinateur, détermine le type des données de contenu stockées par le dispositif.

14. Produit de programme d'ordinateur selon la revendication 13, dans lequel la première partie exécutable est en outre configurée, lorsqu'elle est exécutée sur un ordinateur, pour spécifier une quantité prédéterminée de données à transférer et la position dans les données par rapport à laquelle transférer la quantité prédéterminée en fonction du type des données de contenu stockées par le dispositif.

15. Système comprenant :
un premier dispositif (10) configuré pour stocker des données comprenant des métadonnées et des données de contenu ;
un second dispositif (52) configuré pour communiquer avec le premier dispositif ; et
une connexion configurée pour supporter des communications entre le premier dispositif et le second dispositif ;
dans lequel le second dispositif est configuré pour émettre une commande vers le premier dispositif via la connexion spécifiant une quantité de données à transférer et une position dans les données à partir de laquelle la quantité spécifiée de données doit être transférée ; pour recevoir, depuis le premier dispositif, une partie des données comprenant les métadonnées, mais moins que toutes les données de contenu, en réponse à la commande ; et pour analyser la partie de données reçues afin d'accéder aux métadonnées.
